# EUROPÄISCHE PATENTSCHRIFT

(11) **EP 3 786 091 B1**
(45) Veröffentlichungstag und Bekanntmachung des Hinweises auf die Patenterteilung: **13.12.2023**
(21) Anmeldenummer: 19194574.0
(22) Anmeldetag: 30.08.2019
(51) Int. Cl.: B65G 47/08, B65G 47/26, B65G 57/32

(54) **SPEICHERVORRICHTUNG FÜR TRANSPORTGÜTER UND SPEICHERVERFAHREN**
STORAGE DEVICE FOR TRANSPORTED GOODS AND STORAGE METHOD
DISPOSITIF DE STOCKAGE POUR MARCHANDISES À TRANSPORTER ET PROCÉDÉ DE STOCKAGE

(43) Veröffentlichungstag der Anmeldung: 03.03.2021
(73) Patentinhaber: Körber Supply Chain Logistics GmbH, 78467 Konstanz (DE)
(72) Erfinder: WANNER, Bertram, 88709 Meersburg (DE)
(74) Vertreter: Müller Schupfner & Partner Patent- und Rechtsanwaltspartnerschaft mbB

(56) Entgegenhaltungen:
- EP-A1- 2 204 343
- WO-A1-2007/090636
- DE-A1- 19 917 655
- DE-B- 1 260 290
- FR-A5- 2 095 656
- JP-A- H05 305 927
- US-A- 6 098 782
- US-A1- 2013 134 015

## Beschreibung

Die vorliegende Erfindung betrifft eine Speichervorrichtung für Transportgüter, insbesondere Pakete, und ein Verfahren zur Speicherung von Transportgütern, insbesondere Paketen.

Zur weitgehend automatisierten Bearbeitung von Transportgütern, beispielsweise Paketen, sind Bearbeitungssysteme bekannt. Aus einem Transportgutstrom in einem solchen Bearbeitungssystem können mithilfe von Sortieranlagen einzelne Transportgüter nach vorgegebenen Kriterien, beispielsweise Destination, Volumen, Gewicht, Zerbrechlichkeit und/oder dergleichen, zur Weiterbearbeitung ausgeschleust werden. Nach dem Ausschleusen müssen die Transportgüter häufig bis zur weiteren Bearbeitung, z. B. bis zur Verladung, gespeichert werden.

So weist ein Lkw beispielsweise ein bestimmtes Ladevolumen auf. Das Beladen des Lkws mit Transportgütern startet aus Effizienzgründen üblicherweise erst dann, wenn genügend Transportgüter für ein kontinuierliches Beladen vorhanden sind.

Zum Speichern der Transportgüter sind Speichervorrichtungen bekannt, die sogenannte Speicherrutschen aufweisen, in denen die Transportgüter hauptsächlich durch Schwerkraft befördert werden und deren unteres Ende verschließbar ist. In einer solchen Speichervorrichtung können die Transportgüter bei verschlossener Speicherrutsche entsprechend gespeichert werden, ohne den Transportgutstrom im Bearbeitungssystem zu stören. Dabei rutschen die zu speichernden Transportgüter die Speicherrutsche so weit hinunter, bis sie auf bereits gespeicherte Transportgüter treffen.

US 2013134015 A1 zeigt eine Vorrichtung zum Ausrichten von Gegenständen mit ersten Endabschnitten und zweiten Endabschnitten, die eine von der Form der ersten Endabschnitte abweichende Form aufweisen, richtet Gegenstände aus. US 2013134015 offenbart eine Vorrichtung gemäß dem Obergriff des Anspruchs 1 sowie ein Verfahren gemäß dem Oberbegriff des Anspruchs 14.

DE 19917655 A1 zeigt eine Vorrichtung zum Bilden eines Produktstrangs aus mehreren Produkten, die mittels eines Einlaufförderbandes einzeln zugeführt und schuppenförmig überlappend auf ein Auslaufförderband aufeinander gebracht und als Produktstrang abgeführt werden.

DE 1260290 B zeigt eine Vorrichtung zur schuppenförmigen Ablage von Bogen auf Förderbändern niedrigerer Geschwindigkeit mit die Bogen versteifenden, kurvenförmigen Führungsflächen.

JP H 05305927 A zeigt eine Vorrichtung, bei der Pakete, die in vier Linien ausgerichtet transportiert werden, durch Führungswände an einem Einlass einer Überlappungsvorrichtung geführt werden.

US 6098782 A zeigt einen Drehmanipulator für Fördergüter, der zwischen einem Eingangs- oder Zufuhrförderer und einem oder mehreren Ausgangsförderern angeordnet ist. Der Manipulator weist mindestens eine abgeflachte Seite auf, an deren einem Rand eine Haltelippe verläuft. Artikel, wie z. B. Backwaren, bewegen sich entlang des Zufuhrförderers, wo sie von der abgeflachten Seite des Manipulators erfasst und vorübergehend von der Haltelippe festgehalten werden.

Es ist eine Aufgabe der vorliegenden Erfindung, das Speichern von Transportgütern zu verbessern, insbesondere die Belastung von gespeicherten Transportgütern zu verringern und/oder kompakter zu machen.

Diese Aufgabe wird gelöst durch eine Speichervorrichtung für Transportgüter, insbesondere Pakete, und ein Verfahren zur Speicherung von Transportgütern, insbesondere Paketen, gemäß den unabhängigen Ansprüchen.

Eine Speichervorrichtung für Transportgüter, insbesondere Pakete, gemäß einem ersten Aspekt der Erfindung weist eine erste Fördereinrichtung, eine zweite Fördereinrichtung und eine Umlenkeinrichtung zum Umlenken von durch die erste Fördereinrichtung geförderten Transportgütern auf die zweite Fördereinrichtung auf. Erfindungsgemäß ist eine Motoranordnung zum motorischen Antreiben der ersten Fördereinrichtung und/oder der zweiten Fördereinrichtung und ein Absatz vorgesehen, über den die Transportgüter gefördert werden. Die Speichervorrichtung ist dabei dazu eingerichtet, die Transportgüter mithilfe des Absatzes vertikal zu verdichten.

Ein Absatz im Sinne der Erfindung wird insbesondere durch die Anordnung von zwei Komponenten der Speichervorrichtung in unterschiedlichen Höhen gebildet. Insbesondere kann ein Absatz zwischen zwei Komponenten, zum Beispiel zwei Fördereinrichtungen, gebildet sein, indem die zwei Komponenten in vertikaler Richtung beabstandet angeordnet sind. Dabei grenzen die zwei Komponenten in horizontaler Richtung vorzugsweise aneinander an.

Eine Motoranordnung im Sinne der Erfindung ist insbesondere eine Anordnung aus mehreren Motoren, insbesondere Elektromotoren. Dabei können einzelne Motoren mit unterschiedlichen Fördereinrichtungen und/oder Umlenkeinrichtungen gekoppelt sein. Beispielsweise kann ein erster Elektromotor mit der ersten Fördereinrichtung und ein zweiter Elektromotor mit der zweiten Fördereinrichtung gekoppelt sein.

Eine vertikale Verdichtung im Sinne der Erfindung ist insbesondere ein Stapeln oder Anhäufen von Transportgütern in einer vertikalen Richtung, d. h. in Wirkrichtung der Gravitation. Bei der vertikalen Verdichtung werden die Transportgüter vorzugsweise zumindest teilweise übereinander geschichtet.

Ein Aspekt der Erfindung basiert auf dem Ansatz, in einer Speichervorrichtung eine Motoranordnung, zum Beispiel einen oder mehrere Elektromotoren, vorzusehen, um eine erste Fördereinrichtung und/oder eine zweite Fördereinrichtung zur Beförderung von Transportgütern motorisch anzutreiben. Dadurch ist es möglich, einen Förderweg durch die Speichervorrichtung besonders flexibel zu gestalten, insbesondere zumindest abschnittsweise ansteigend und/oder zumindest horizontal verlaufend. Dies kann Bauraum unterhalb der ersten und zweiten Fördereinrichtung einsparen, sodass die Speichervorrichtung beispielsweise leichter mit einem zu beladenden Lkw unterfahren werden kann. Insbesondere kann dadurch eine Ladebrücke oder Laderampe unterhalb der Fördereinrichtungen vorgesehen sein. Darüber hinaus kann ein Zuführen von Transportgütern zur Speichervorrichtung oder ein Ausgeben von Transportgütern aus der Speichervorrichtung durch die aktive Beförderung der Transportgüter präzise kontrolliert werden. So können gegenüber konventionellen Speichervorrichtungen auf die Transportgüter wirkende Belastungen deutlich reduziert werden.

Zusätzlich ist vorgesehen, dass die Speichervorrichtung einen Absatz aufweist, über den die Transportgüter bei Ihrer Speicherung gefördert werden. Dabei ist die Speichervorrichtung vorzugsweise dazu eingerichtet, beispielsweise durch entsprechendes Betreiben der ersten und/oder zweiten Fördereinrichtung, die Transportgüter mithilfe des Absatzes in vertikaler Richtung zu verdichten, d. h. zumindest einen Teil der Transportgüter teilweise zu stapeln oder zumindest anzuhäufen. Der Absatz kann z. B. derart ausgebildet sein, dass eingehende Transportgüter auf die erste Fördereinrichtung oder von einer Umlenkeinrichtung umgelenkte Transportgüter auf die zweite Transporteinrichtung herabfallen. Weitere über den Absatz geförderte Transportgüter können somit einen Stapel bzw. Haufen bilden, bis die erste bzw. zweite Fördereinrichtung den gebildeten Stapel weiterbefördert und somit Platz für einen neuen Stapel schafft. Dabei erfolgt das (Weiter-)Befördern mithilfe der ersten bzw. zweiten Fördereinrichtung vorzugsweise schrittweise, sodass eine durchgehende Verdichtung und damit eine besonders raumeffiziente Speicherung erzielt werden kann.

Der Absatz weist vorzugsweise eine Höhe von 3 bis 500 mm auf. In diesem Bereich besteht z. B. im Hinblick auf zu speichernde Pakete ein guter Kompromiss zwischen den auftretenden Abmessungen und den beim Befördern über den Absatz auftretenden Belastungen. Um eine höhere Speicherkapazität durch höhere Transportgüterstapel bzw. -haufen zu erzielen, können größere Absatzhöhen gewählt werden.

Die erste Fördereinrichtung und die zweite Fördereinrichtung definieren vorzugsweise jeweils eine gerade Förderstrecke. Die Förderstrecken können beispielsweise jeweils etwa 5 bis 25 m, vorzugsweise etwa 10 bis 20 m, insbesondere etwa 14 m, betragen.

Die Umlenkeinrichtung ist dazu eingerichtet, die Transportgüter in eine Richtung zumindest im Wesentlichen senkrecht zu der durch die erste und/oder zweite Fördereinrichtung gebildete Förderstrecke umzulenken. Dabei bildet auch die Umlenkeinrichtung eine gerade Förderstrecke, die vorzugsweise senkrecht zu den durch die Fördereinrichtungen definierten Förderstrecken, zumindest jedoch senkrecht zu der durch die zweite Fördereinrichtung definierten Förderstrecke, verläuft.

Die erste und zweite Fördereinrichtung umfassen jeweils wenigstens ein aktives, d. h. mithilfe der Motoranordnung antreibbares, Fördermittel, zum Beispiel ein Förderband. Auch die Umlenkeinrichtung kann ein aktives Fördermittel, zum Beispiel ein Förderband, umfassen. Durch das Vorsehen eines aktiven Fördermittels wird die Beförderung der Transportgüter besonders zuverlässig und kontrollierbar.

Alternativ ist es aber auch denkbar, die Umlenkeinrichtung passiv auszubilden, zum Beispiel als Rollenbahn oder als Rutsche. Dies kann den Aufbau der Speichervorrichtung vereinfachen.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform ist die zweite Fördereinrichtung relativ zur Umlenkeinrichtung derart angeordnet, dass der Absatz zwischen der Umlenkeinrichtung und der zweiten Fördereinrichtung gebildet ist. Insbesondere kann die zweite Fördereinrichtung derart angeordnet sein, dass von der Umlenkeinrichtung umgelenkte Transportgüter auf die zweite Fördereinrichtung herabfallen, zum Beispiel aus einer Höhe zwischen 3 und 500 mm. Diese Anordnung entspricht einer besonders effizienten Ausbildung der Speichervorrichtung, da der Förderweg der Transportgüter innerhalb der Speichervorrichtung zum Zwecke der Umlenkung ohnehin unterbrochen ist. Ist der Absatz in Transportrichtung hinter der Umlenkeinrichtung vorgesehen, ist daher keine zusätzliche Unterbrechung des Förderwegs notwendig.

Alternativ oder zusätzlich ist es auch denkbar, dass schon die erste Fördereinrichtung gegenüber einer Ebene, in der Transportgüter eingehen, vertikal abgesetzt ist. Der Absatz ist in dieser Ausführung somit in Transportrichtung vor der ersten Fördereinrichtung angeordnet, sodass eine vertikale Verdichtung schon auf der ersten Fördereinrichtung erzielt werden kann. Besonders vorteilhaft ist das Vorsehen mehrerer Absätze, z. B. in Transportrichtung vor der ersten Fördereinrichtung und zwischen der Umlenkeinrichtung und der zweiten Fördereinrichtung. Es kann so eine vertikale Verdichtung an mehreren Stellen innerhalb der Speichervorrichtung realisiert sein, um die Zuverlässigkeit der vertikalen Verdichtung weiter zu erhöhen.

In einer weiteren bevorzugten Ausführungsform ist die Motoranordnung zum motorischen Antreiben der Umlenkeinrichtung eingerichtet. Beispielsweise kann die Motoranordnung einen, insbesondere elektrischen, Umlenkmotor umfassen, der mit der Umlenkeinrichtung gekoppelt ist. Durch den motorischen Antrieb kann die Umlenkung besonders zuverlässig erfolgen. Insbesondere kann die Gefahr eines Verkeilens oder Hängenbleibens von Transportgütern im Bereich der Umlenkeinrichtung zumindest reduziert werden.

Erfindungsgemäß erstreckt sich die zweite Fördereinrichtung zumindest im Wesentlichen parallel zur ersten Fördereinrichtung. Eine parallele Erstreckung ist hierbei insbesondere die parallele Ausrichtung einer Hauptlängserstreckung der zweiten Fördereinrichtung relativ zu einer Hauptlängserstreckung der ersten Fördereinrichtung. Mit anderen Worten können Transportgüter durch die zweite Fördereinrichtung in einer Transportrichtung, die der Transportrichtung von durch die erste Fördereinrichtung beförderten Transportgüter entspricht bzw. entgegengesetzt ist, befördert werden. Dabei ist die zweite Fördereinrichtung vorzugsweise angrenzend an die erste Fördereinrichtung angeordnet. Der Förderweg, der sich aus den durch die erste und zweite Fördereinrichtung definierten Förderstrecken zusammensetzt, kann somit eine U-Form bilden. Dadurch kann, auch bei begrenztem, Bauraum, ein hohes Speichervolumen der Speichervorrichtung, z. B. wenigstens 5 m³, vorzugsweise wenigstens 8 m³, insbesondere wenigstens 10 m³, realisiert werden.

Alternativ ist es aber auch denkbar, dass sich die zweite Fördereinrichtung im Wesentlichen rechtwinklig zur ersten Fördereinrichtung erstreckt. Dies kann z. B. vorteilhaft sein, wenn aufgrund von Bauraumbeschränkungen keine Laderampe unter der ersten Fördereinrichtung angeordnet werden kann.

In einer weiteren bevorzugten Ausführungsform ist die zweite Fördereinrichtung an einem ersten Ende von einer Hinterwand begrenzt. Die Speichervorrichtung ist dabei in einem Verdichtungsbetriebsmodus betreibbar, in dem die zweite Fördereinrichtung, zum Beispiel durch entsprechende Ansteuerung der Motoranordnung, die Transportgüter gegen die Hinterwand treibt. Insbesondere werden die Transportgüter durch die zweite Fördereinrichtung im Verdichtungsbetriebsmodus bei sich parallel erstreckenden ersten und zweiten Fördereinrichtungen vorzugsweise in einer Transportrichtung, die der Transportrichtung von durch die erste Fördereinrichtung beförderten Transportgüter entgegengesetzt ist, befördert. Dadurch kann ein horizontales Verdichten der Transportgüter erzielt werden, d. h. die Dichte an gespeicherten Transportgütern entlang der durch die zweite Fördereinrichtung definierten Förderstrecke kann auf diese Weise erhöht werden.

In einer weiteren bevorzugten Ausführungsform ist die Speichervorrichtung in einem Entladebetriebsmodus betreibbar. In diesem treibt die zweite Fördereinrichtung die Transportgüter vorzugsweise zu einem zweiten Ende der zweiten Fördereinrichtung, an dem die Transportgüter aus der Speichervorrichtung ausgebbar sind. Die Speichervorrichtung kann beispielsweise dazu eingerichtet sein, die Transportgüter auf der zweiten Fördereinrichtung zur effizienten Speicherung zunächst im Verdichtungsbetriebsmodus horizontal zu verdichten und, wenn die Speichereinrichtung gefüllt ist, die auf den beiden Fördereinrichtungen angeordneten Transportgüter im Entladebetriebsmodus auszugeben. Das Speichervolumen der Speichervorrichtung kann so besonders gut ausgenutzt werden.

In einer weiteren bevorzugten Ausführungsform weist die Speichervorrichtung eine Sensoreinrichtung zur Erfassung von, insbesondere in die Speichervorrichtung eingehenden, Transportgütern und eine Steuerungseinrichtung auf. Die Sensoreinrichtung kann beispielsweise einen optischen Sensor wie etwa eine Kamera oder eine Lichtschranke aufweisen. Die Steuerungseinrichtung ist vorzugsweise dazu eingerichtet, die Motoranordnung auf Grundlage der Erfassung von Transportgütern zu steuern. Die Steuerungseinrichtung kann beispielsweise dazu eingerichtet sein, ein schrittweises Befördern der Transportgüter durch die erste und/oder zweite Fördereinrichtung zu veranlassen. Insbesondere kann die Steuerungseinrichtung dazu eingerichtet sein, einen Transport der Transportgüter auf der ersten Fördereinrichtung zu veranlassen, wenn z. B. die als Lichtschranke ausgebildete Sensoreinrichtung, z. B. durch sich rückstauende Transportgüter, länger als eine vorgegebene maximale Zeitdauer unterbrochen wird. Ein solcher Transportgüterrückstau kann sich zum Beispiel bilden, wenn sich hinter einem Absatz vor der ersten oder zweiten Fördereinrichtung ein Stapel oder Haufen gebildet hat, dessen Höhe im Wesentlichen der Höhe des Absatzes entspricht, d. h. der das Herabfallen weiterer Transportgüter auf die erste oder zweite Fördereinrichtung verhindert. Dadurch kann eine zuverlässige und im Wesentlichen kontinuierliche vertikale Verdichtung der Transportgüter in der Speichervorrichtung erreicht werden.

In einer weiteren bevorzugten Ausführungsform kann die Steuerungseinrichtung eingerichtet sein, von außerhalb der Speichervorrichtung bereitgestellte Information bezüglich eingehender Transportgüter aufzunehmen und die Motoranordnung auf Grundlage der aufgenommenen Information zu steuern. Diese Steuerung kann alternativ oder zusätzlich zur Steuerung auf Grundlage von mithilfe der Sensoreinrichtung erfassten Transportgütern erfolgen. Zum Beispiel kann die Steuerungseinrichtung dazu eingerichtet sein, eine Beförderung der Transportgüter auf der ersten und/oder zweiten Fördereinrichtung in Abhängigkeit der Abmessungen bzw. des Volumens eingehender Transportgüter zu veranlassen. Es ist etwa denkbar, dass die Steuerungseinrichtung eine Beförderung von auf der ersten Fördereinrichtung liegenden Transportgütern veranlasst, um Platz auf der ersten Fördereinrichtung für ein besonders großes eingehendes Transportgut zu schaffen. Dadurch kann verhindert werden, dass sich bereits auf der Fördereinrichtung befindliche Transportgüter von einem (großen) eingehenden Transportgut beschädigt werden, insbesondere, wenn dieses Transportgut über den Absatz auf die Fördereinrichtung herabfällt.

In einer weiteren bevorzugten Ausführungsform umfasst die erste Fördereinrichtung wenigstens ein Fördermittel, z. B. ein Förderband. Insbesondere kann die erste Fördereinrichtung genau ein Fördermittel umfassen. Dies erlaubt eine besonders zuverlässige Beförderung der Transportgüter durch die erste Fördereinrichtung. Zudem kann dies das Antreiben der ersten Fördereinrichtung durch die Motoranordnung, insbesondere einen ersten Elektromotor, erleichtern.

In einer weiteren bevorzugten Ausführungsform umfasst die zweite Fördereinrichtung wenigstens zwei Fördermittel, z. B. zwei Förderbänder, die unabhängig voneinander, vorzugsweise auch unabhängig von dem wenigstens einen Fördermittel der ersten Fördereinrichtung, mithilfe der Motoranordnung antreibbar sind. Insbesondere kann die zweite Fördereinrichtung genau zwei Fördermittel umfassen. Beispielsweise kann die Speichervorrichtung, insbesondere die Steuerungseinrichtung, dazu eingerichtet sein, das Befördern von Transportgütern durch nur eines der wenigstens zwei Fördermittel der zweiten Fördereinrichtung zu veranlassen. Dadurch ist es möglich, lediglich einen Teil der sich auf der zweiten Fördereinrichtung befindlichen Transportgüter zur Ausgabe aus der Speichervorrichtung an das zweite Ende der zweiten Fördereinrichtung zu befördern, etwa um einen Lkw mit geringem Ladevolumen zu beladen. Zudem ermöglicht das Vorsehen von wenigstens zwei Fördermitteln der zweiten Fördereinrichtung ein schrittweises Ausgeben von gespeicherten Transportgütern aus der Speichervorrichtung (sog. Batch-Entleerung). Dies kann die Logistik erleichtern.

Die Steuerungseinrichtung ist vorzugsweise dazu eingerichtet, die Fördermittel der ersten und zweiten Fördereinrichtung im Verdichtungsbetriebsmodus synchron mithilfe der Motoranordnung anzutreiben. Zumindest im Entladebetriebsmodus kann die Steuerungseinrichtung die verschiedenen Fördermittel aber auch unabhängig voneinander, insbesondere nacheinander, mithilfe der Motoranordnung antreiben.

In einer weiteren bevorzugten Ausführungsform weist die Speichervorrichtung eine weitere Umlenkeinrichtung zum Umlenken von durch die zweite Fördereinrichtung geförderten Transportgütern auf. Die weitere Umlenkeinrichtung ist dabei in bevorzugter Weise dazu eingerichtet, die Transportgüter in eine Transportrichtung senkrecht zur Transportrichtung, in welcher Transportgüter durch die zweite Fördereinrichtung befördert werden, umzulenken. Die weitere Umlenkeinrichtung kann zu diesem Zweck insbesondere ein Fördermittel, z. B. ein Förderband, aufweisen. Vorzugsweise ist die weitere Umlenkeinrichtung dazu eingerichtet, von der zweiten Fördereinrichtung beförderte Transportgüter zu einer Ausgabeeinrichtung zur Ausgabe der Transportgüter aus der Speichervorrichtung umzulenken. Alternativ kann die weitere Umlenkeinrichtung aber auch dazu eingerichtet sein, von der zweiten Fördereinrichtung beförderte Transportgüter auf eine weitere Fördereinrichtung umzulenken. Komponenten der Speichervorrichtung, insbesondere eine Ausgabeeinrichtung oder weitere Fördereinrichtungen, können auf diese Weise bauraumsparend angeordnet sein.

In einer weiteren bevorzugten Ausführungsform weist die Speichervorrichtung eine Ausgabeeinrichtung auf, die zur Ausgabe von durch die erste und zweite Fördereinrichtung beförderten Transportgütern, insbesondere durch die weitere Umlenkeinrichtung umgelenkten Transportgütern, aus der Speichervorrichtung eingerichtet ist. Die Ausgabeeinrichtung kann dabei dazu eingerichtet sein, die Transportgüter in eine Transporteinrichtung, z. B. einen Lkw, auszugeben. Zu diesem Zweck kann die Ausgabeeinrichtung als Teleskopförderer mit variierbarer Förderlänge eingerichtet sein.

In einer weiteren bevorzugten Ausführungsform weist die Speichervorrichtung zwei Seitenwände auf, die auf einander gegenüberliegenden Längsseiten der ersten Fördereinrichtung, insbesondere zur Führung der Transportgüter, angeordnet sind, wobei eine der zwei Seitenwände in einem vorgegebenen Abstand zur Umlenkeinrichtung endet. Mit anderen Worten erstreckt sich eine der Seitenwände über die gesamte Länge der ersten Fördereinrichtung, während die andere der Seitenwände demgegenüber verkürzt ist. Diese verkürzte Seitenwand kann sich beispielsweise lediglich über 70 bis 90 %, insbesondere etwa 80 %, der Gesamtlänge der ersten Fördereinrichtung erstrecken. Insbesondere kann der vorgegebene Abstand 1 bis 4 m, vorzugsweise 1,5 bis 3 m, betragen, insbesondere bei einer Länge der ersten Fördereinrichtung von etwa 14 m. Dies kann die Umlenkung der Transportgüter auf die zweite Fördereinrichtung erleichtern. Insbesondere kann so die Gefahr eines Verkeilens der Transportgüter, insbesondere überdurchschnittlich großer Transportgüter, bei der Umlenkung verringert werden.

Die Seitenwände verlaufen vorzugsweise entlang der durch die erste Fördereinrichtung definierten Förderstrecke. Die verkürzte Seitenwand, die in dem vorgegebenen Abstand zur Umlenkeinrichtung endet, kann dabei auch die zweite Fördereinrichtung auf einer ihrer Längsseiten begrenzen. Dies erlaubt eine besonders kompakte Ausbildung der Speichervorrichtung.

In einer weiteren bevorzugten Ausführungsform weist die Speichervorrichtung wenigstens eine weitere mithilfe der Motoranordnung antreibbare Fördereinrichtung und eine weitere Umlenkeinrichtung zum Umlenken von durch die zweite Fördereinrichtung geförderten Transportgütern auf die wenigstens eine weitere Fördereinrichtung auf. Dabei erstreckt sich die wenigstens eine weitere Fördereinrichtung vorzugsweise parallel zur zweiten Fördereinrichtung. Die wenigstens eine weitere Transporteinrichtung kann somit Transportgüter in einer Transportrichtung befördern, die der Transportrichtung von durch die zweite Transporteinrichtung beförderten Transportgütern entgegengesetzt ist. In bevorzugter Weise ist zwischen der einen weiteren Umlenkeinrichtung und der wenigstens einen weiteren Fördereinrichtung ein weiterer Absatz, insbesondere zum weiteren vertikalen Verdichten des Transportguts, vorgesehen. Das Vorsehen wenigstens einer weiteren Fördereinrichtung erlaubt eine noch kompaktere Ausbildung der Speichervorrichtung in einer Richtung senkrecht zu den durch die parallel angeordneten Fördereinrichtungen definierten Förderstrecken.

Vorteilhaft können die Fördereinrichtungen derart angeordnet sein, dass sie einen im Wesentlichen spiralförmigen bzw. helixartigen Förderweg definieren. Der Förderweg setzt sich dabei aus den mit den Fördereinrichtungen jeweils korrespondierenden Förderstrecken zusammen. Bei einem spiralförmig ausgebildeten Förderweg ist die wenigstens eine weitere Fördereinrichtung in bevorzugter Weise besonders raumsparend unterhalb der ersten Fördereinrichtung angeordnet. Der vertikale Abstand zwischen der ersten und der wenigstens einen weiteren Fördereinrichtung, d. h. die Ganghöhe der Spirale bzw. Helix, kann dabei beispielsweise durch die Höhe des Absatzes zwischen der Umlenkeinrichtung und der zweiten Fördereinrichtung und gegebenenfalls auch durch einen weiteren Absatz zwischen der weiteren Umlenkeinrichtung und der wenigstens einen weiteren Fördereinrichtung definiert sein. Alternativ oder zusätzlich kann die erste und/oder die zweite Fördereinrichtung auch gegenüber der Horizontalen verkippt angeordnet sein, d. h. eine abfallende Förderstrecke definieren, um eine ausreichende Ganghöhe zu erreichen.

Alternativ können die Fördereinrichtungen auch derart angeordnet sein, dass sie einen mäandernden Förderweg definieren. Dies ist insbesondere vorteilhaft, wenn der Absatz zwischen zwei Fördereinrichtungen oder die Absätze zwischen mehr als zwei Fördereinrichtungen nicht hoch genug ist bzw. sind, um die wenigstens eine weitere Fördereinrichtung unterhalb der ersten Fördereinrichtung anzuordnen und gleichzeitig eine zuverlässige Beförderung auch von großvolumigen Transportgütern zu gewährleisten.

Ein Verfahren zum Speichern von Transportgütern, insbesondere Paketen, gemäß einem zweiten Aspekt der Erfindung, vorzugsweise mithilfe einer Speichervorrichtung nach dem ersten Aspekt der Erfindung, weist die folgenden Schritte auf: (i) motorisches Antreiben einer ersten Fördereinrichtung und einer zweiten Fördereinrichtung mithilfe einer Motoranordnung; (ii) Umlenken von durch die erste Fördereinrichtung geförderten Transportgütern auf die zweite Fördereinrichtung mithilfe einer Umlenkeinrichtung; und (iii) Befördern der Transportgüter über einen Absatz zur vertikalen Verdichtung, vorzugsweise mithilfe der Umlenkeinrichtung. Dabei müssen die Verfahrensschritte nicht notwendigerweise in der angegebenen Reihenfolge ausgeführt werden. Insbesondere ist es denkbar, die Transportgüter zunächst mithilfe der ersten Fördereinrichtung zu befördern, dann mithilfe der Umlenkeinrichtung auf die zweite Fördereinrichtung umzulenken und dabei, zumindest in einer speziellen Ausführungsform, über den Absatz zu befördern und anschließend mithilfe der zweiten Fördereinrichtung weiter zu befördern.

Die voranstehend beschriebenen Eigenschaften, Merkmale und Vorteile der Erfindung sowie die Art und Weise, wie diese erreicht werden, werden klarer und deutlicher verständlich im Zusammenhang mit der folgenden Beschreibung von Ausführungsbeispielen der Erfindung, die im Zusammenhang mit den Figuren, in denen durchgängig dieselben Bezugszeichen für dieselben oder einander entsprechende Elemente der Erfindung verwendet werden, näher erläutert werden. Die Ausführungsbeispiele dienen der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale der Ausführungsbeispiele auch explizit isoliert betrachtet und mit einem beliebigen der Ansprüche kombiniert werden.

Es zeigen wenigstens teilweise schematisch:
- FIG 1: ein Beispiel einer Speichervorrichtung mit zwei Fördereinrichtungen;
- FIG 2: ein Beispiel einer Speichervorrichtung mit drei Fördereinrichtungen; und
- FIG 3: ein Beispiel eines Verfahrens zum Speichern von Transportgütern.

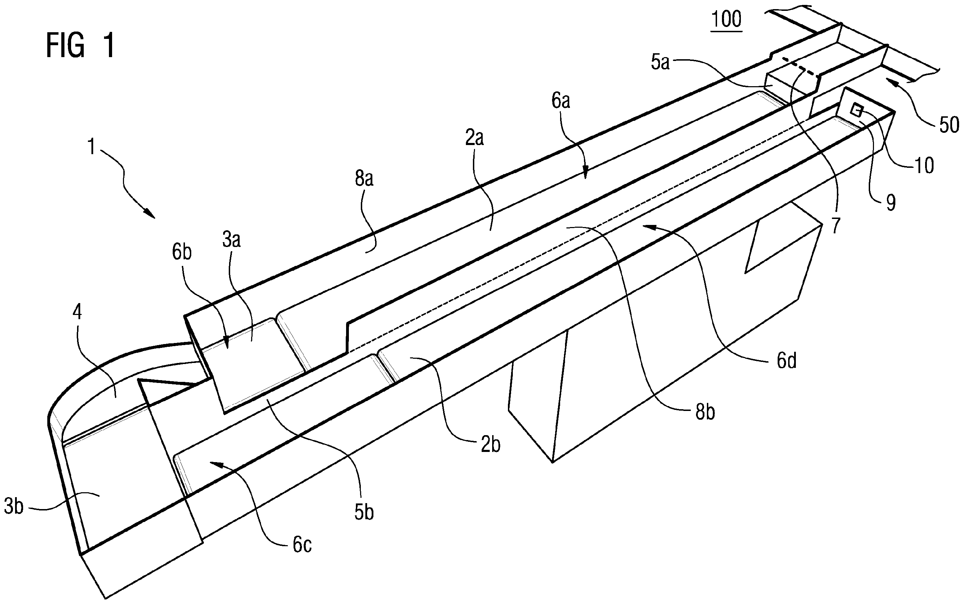

**FIG 1** zeigt ein Beispiel einer Speichervorrichtung 1 für Transportgüter, insbesondere Pakete, mit zwei Fördereinrichtungen 2a, 2b. Die Fördereinrichtungen 2a, 2b sind mit einer Motoranordnung (nicht gezeigt) gekoppelt, die zum motorischen Antreiben der Fördereinrichtungen 2a, 2b eingerichtet ist. Von der ersten Fördereinrichtung 2a beförderte Transportgüter können mithilfe einer Umlenkeinrichtung 3a auf die zweite Fördereinrichtung 2b umgelenkt werden, sodass sich zu speichernde Transportgüter auf beide Fördereinrichtungen 2a, 2b verteilen. Die Transportrichtung der zweiten Fördereinrichtung 2b ist umkehrbar. Über eine weitere Umlenkeinrichtung 3b können somit von der zweiten Fördereinrichtung 2b beförderte Transportgüter zu einer Ausgabeeinrichtung 4 umgelenkt werden. Mithilfe der Ausgabeeinrichtung 4, die beispielsweise als Teleskopförderer mit variabler Förderlänge oder als Rutsche ausgebildet sein kann, ist es möglich, ein unter den Fördereinrichtungen 2a, 2b stehendes Transportmittel, zum Beispiel einen Lkw, mit den in der Speichervorrichtung 1 gespeicherten Transportgütern zu beladen.

Die Speichervorrichtung 1 ist vorzugsweise Teil eines Bearbeitungssystems 100 für Transportgüter, insbesondere Pakete, und kann beispielsweise zur Speicherung von aus einem Transportgutstrom durch das Bearbeitungssystem 100 ausgeschleusten Transportgütern verwendet werden. Dabei werden die Transportgüter vorzugsweise mithilfe einer Sortiereinrichtung 50 ausgeschleust, die mit der Speichervorrichtung 1 gekoppelt ist. So können aus dem Transportgutstrom ausgeschleuste Transportgüter in die Speichervorrichtung 1 eingehen.

Die Speichervorrichtung 1 weist zur vertikalen Verdichtung der zu speichernden Transportgüter im gezeigten Ausführungsbeispiel zwei Absätze 5a, 5b, über welche die Transportgüter befördert werden können, auf. Der erste Absatz 5a ist an einem der Sortiereinrichtung 50 zugewandten ersten Ende der ersten Fördereinrichtung 2a angeordnet, sodass in die Speichervorrichtung 1 eingehende Transportgüter über den ersten Absatz 5a auf die erste Fördereinrichtung 2a, zum Beispiel aus einer Höhe zwischen 3 und 500 mm, herabfallen. Die erste Fördereinrichtung 2a kann zu diesem Zweck beispielsweise gegenüber einer Ebene, in der die aus dem Transportgutstrom ausgeschleusten Transportgüter in die Speichereinrichtung 1 eingehen, vertikal abgesetzt sein.

Um die vertikale Verdichtung, d.h. zum Beispiel Transportgutstapel oder -haufen zu erzielen, wird ein Fördermittel 6a der ersten Fördereinrichtung 2a, zum Beispiel ein Förderband, zur Beförderung der Transportgüter in Richtung der an einem der Sortiereinrichtung 50 abgewandten zweiten Ende der ersten Fördereinrichtung 2a vorzugsweise nur schrittweise bewegt. Zu diesem Zweck kann beispielsweise eine Steuerungseinrichtung (nicht gezeigt) vorgesehen sein, welche die Motoranordnung entsprechend steuert. Insbesondere kann die Steuerungseinrichtung dazu eingerichtet sein, die Motoranordnung zum motorischen Antrieb der ersten Fördereinrichtung 2a und damit zur Beförderung der sich auf der ersten Fördereinrichtung 2a befindlichen Transportgüter zu veranlassen, wenn eine in Transportrichtung vor dem ersten Absatz 5a angeordnete, als Lichtschranke ausgebildete Sensoreinrichtung 7 länger als eine vorgegebene maximale Zeitdauer unterbrochen ist bzw. ausgelöst wird. Eine solche Unterbrechung kann beispielsweise durch einen Rückstau von Transportgütern erzeugt werden, etwa wenn sich die Transportgüter in Transportrichtung hinter dem ersten Absatz 5a, d. h. auf der ersten Fördereinrichtung 2a, bis auf die Höhe des Absatzes 5a gestapelt haben und somit weitere Transportgüter nicht vom ersten Absatz 5a herabfallen können. Bewegt sich in diesem Fall das Fördermittel 6a weiter, wird in Transportrichtung hinter dem ersten Absatz 5a wieder Platz geschaffen, sodass die sich rückstauenden Transportgüter über den Absatz 5a auf die erste Fördereinrichtung 2a herabfallen können. Vorzugsweise ist die Steuerungseinrichtung dazu eingerichtet, die Motoranordnung in der Weise zu steuern, dass sich das Fördermittel 6a nur um eine vorgegebene Strecke, zum Beispiel um eine durchschnittliche Transportgutlänge, weiterbewegt. Dadurch kann sich ein neuer Transportgutstapel bzw. -haufen bilden. Auf diese Weise lässt sich eine zumindest im Wesentlichen homogene vertikale Verdichtung entlang der durch die erste Fördereinrichtung 2a definierten Förderstrecke erzielen.

Alternativ oder zusätzlich ist es auch möglich, dass die Steuerungseinrichtung dazu eingerichtet ist, bei der Steuerung der Motoranordnung Information bezüglich der eingehenden Transportgüter, die zum Beispiel von der Sortiereinrichtung 50 bereitgestellt werden kann, zu berücksichtigen. Solche Informationen, etwa bezüglich der Abmessungen und/oder des Volumens der eingehenden Transportgüter, kann dazu genutzt werden, ausreichend Platz auf der ersten Fördereinrichtung 2a hinter dem ersten Absatz 5a für besonders große, insbesondere überdurchschnittlich große, Transportgüter zu schaffen. Zu diesem Zweck ist die Steuerungseinrichtung vorzugsweise dazu eingerichtet, das Fördermittel 6a vorsorglich über eine entsprechende Ansteuerung der Motoranordnung weiterzubewegen, wenn die von der Sortiereinrichtung 50 bereitgestellte Information das Eingehen eines großen Transportguts anzeigt. Das Fördermittel 6a kann dabei insbesondere um die Größe des eingehenden Transportguts, insbesondere um eine aus seinen Abmessungen abgeleitete Strecke, weiterbewegt werden. Dies kann nicht nur einem Rückstau vorbeugen, sondern ermöglicht auch das Vermeiden unnötigen Quetschens von sich bereits auf der ersten Fördereinrichtung 2a befindlichen Transportgütern durch ein nachfolgendes besonders großes Transportgut.

Die zumindest teilweise gestapelten Transportgüter werden somit schrittweise von der ersten Fördereinrichtung 2a bis zu der vorzugsweise am zweiten Ende der ersten Fördereinrichtung 2a angeordneten Umlenkeinrichtung 3a befördert. Die Umlenkeinrichtung 3a umfasst in bevorzugter Weise ebenfalls ein Fördermittel 6b, insbesondere ebenfalls ein Förderband, das jedoch derart angeordnet ist, dass die Transportgüter im Wesentlichen senkrecht zur durch die erste Fördereinrichtung 2a definierten Förderstrecke auf die zweite Fördereinrichtung 2b umgelenkt werden. Dies erlaubt es, die zweite Fördereinrichtung 2b angrenzend an die erste Fördereinrichtung 2a, insbesondere parallel zur ersten Fördereinrichtung 2a, und somit auf eine besonders kompakte Weise anzuordnen. Durch das Vorsehen der zweiten Fördereinrichtung 2b kann das durch die erste Fördereinrichtung 2a bereitgestellte Speichervolumen der Speichervorrichtung 1 im Wesentlichen verdoppelt werden, ohne dass die Länge der ersten Fördereinrichtung 2a erhöht werden muss. Die Speichervorrichtung 1 kann durch diese kompakte Anordnung beispielsweise auch in schmalen Hallen installiert werden.

Zum Zwecke einer zuverlässigen Beförderung von Transportgütern durch die erste Fördereinrichtung 2a sind vorzugsweise zwei auf einander gegenüberliegenden Längsseiten der ersten Fördereinrichtung 2a angeordnete Seitenwände 8a, 8b vorgesehen. Die auf der von der zweiten Fördereinrichtung 2b abgewandten Längsseite angeordnete Seitenwand 8a erstreckt sich dabei in bevorzugter Weise entlang der gesamten durch die erste Fördereinrichtung 2a definierten Förderstrecke, d. h. insbesondere vom ersten Absatz 5a bis zur Umlenkeinrichtung 3a. Die auf der der zweiten Fördereinrichtung 2b zugewandten Längsseite angeordnete Seitenwand 8b ist dagegen kürzer ausgebildet und endet insbesondere in einem vorgegebenen Abstand zur Umlenkeinrichtung 3a. Die kürzer ausgebildete Seitenwand 8b kann sich beispielsweise über 70 bis 90 % der durch die erste Fördereinrichtung 2a definierten Förderstrecke erstrecken. Dies lässt einen Freiraum im Bereich der Umlenkeinrichtung 3a und ermöglicht so ein zuverlässiges Umlenken auch von großen Transportgütern.

Beim Umlenken der Transportgüter auf die zweite Fördereinrichtung 2b werden die Transportgüter vorzugsweise über den zweiten Absatz 5b zwischen der Umlenkeinrichtung 3a und der relativ dazu vertikal abgesetzten zweiten Fördereinrichtung 2b gefördert, sodass die Transportgüter von der Umlenkeinrichtung 3a auf die zweite Fördereinrichtung 2b herabfallen können. Dadurch wird eine weitere vertikale Verdichtung der Transportgüter auf der zweiten Fördereinrichtung 2b oder zumindest eine zuverlässige Aufrechterhaltung der mithilfe des ersten Absatzes 5a erzielten vertikalen Verdichtung ermöglicht.

Auf die zweite Fördereinrichtung 2b umgelenkte Transportgüter werden zunächst in einem Verdichtungsbetriebsmodus der Speichervorrichtung 1 von der zweiten Fördereinrichtung 2b in Richtung einer an einem ersten Ende der zweiten Fördereinrichtung 2b angeordneten Hinterwand 9 getrieben. Das erste Ende der zweiten Fördereinrichtung 2b ist dabei in bevorzugter Weise der Sortiereinrichtung 50 zugewandt, d.h. das erste Ende der zweiten Fördereinrichtung 2b befindet sich neben dem ersten Ende der ersten Fördereinrichtung 2a, sodass sich ein kompakter U-förmiger Förderweg, der sich aus den durch die erste und zweite Fördereinrichtung 2a, 2b definierten Förderstrecken zusammensetzt, ergibt. Durch das Treiben der Transportgüter gegen die Hinterwand 9 kann eine horizontale Verdichtung der Transportgüter, d.h. eine Verdichtung entlang der durch die zweite Fördereinrichtung 2b definierten Förderstrecke, erzielt werden.

Ist die Speichervorrichtung 1 zumindest im Wesentlichen gefüllt, d.h. sind die erste und zweite Fördereinrichtung 2a, 2b im Wesentlichen vollständig mit Transportgütern belegt, können die Transportgüter in einem Entladebetriebsmodus der Speichervorrichtung 1 durch die zweite Fördereinrichtung 2b zur an einem zweiten Ende der zweiten Fördereinrichtung 2b angeordneten weiteren Umlenkeinrichtung 3b befördert werden. Vorzugsweise geschieht dies schrittweise durch ein unabhängiges Antreiben zweier Fördermittel 6c, 6d der zweiten Fördereinrichtung 2b mithilfe der Motoranordnung. Die beiden Fördermittel 6c, 6d können beispielsweise als zwei entlang der durch die zweite Fördereinrichtung 2b definierten Förderstrecke hintereinander angeordnete Förderbänder ausgebildet sein.

Beispielsweise kann die Steuerungseinrichtung dazu eingerichtet sein, im Entladebetriebsmodus zunächst eine Beförderung der Transportgüter, die sich auf dem am zweiten Ende der zweiten Fördereinrichtung 2b angeordneten Fördermittel 6c befinden, in Richtung der weiteren Umlenkeinrichtung 3b zu veranlassen. Wenn auf diese Weise alle sich im Bereich des zweiten Absatzes 5b befindlichen Transportgüter ausgegeben wurden, kann die Steuerungseinrichtung das Antreiben des am ersten Ende der zweiten Fördereinrichtung 2b angeordneten Fördermittel 6d veranlassen, um auch die restlichen sich auf der zweiten Fördereinrichtung 2b befindlichen Transportgüter auszugeben. Vorzugsweise ist die Steuerungseinrichtung dazu eingerichtet, anschließend das Antreiben des Fördermittels 6a der ersten Fördereinrichtung 2a zu veranlassen, bis die Speichereinrichtung 1 vollständig geleert ist.

Das Vorsehen von zwei Fördermitteln 6c, 6d der zweiten Fördereinrichtung 2b kann es somit erleichtern, die in der Speichervorrichtung 1 gespeicherten Transportgüter schrittweise auszugeben (sog. Batch-Entleerung). Zudem ist es insbesondere auch möglich, zu einem späteren Zeitpunkt von der Speichervorrichtung 1 aufgenommene Transportgüter zuerst auszugeben. Die zwei Fördermittel 6c, 6d können somit die Flexibilität erhöhen und erlauben insbesondere eine Umordnung des Transportgutstroms.

Das im vorliegenden Ausführungsbeispiel zweistufige Entleeren der zweiten Fördereinrichtung 2b mithilfe der zwei Fördermittel 6c, 6d ermöglicht insbesondere eine Verringerung des Verkeilungsrisikos von Transportgütern auf der zweiten Fördereinrichtung 2b mit Transportgütern, die über den zweiten Absatz 5b von der Umlenkeinrichtung 3a aus in die durch die zweite Fördereinrichtung 2b definierten Förderstrecke hineinragen.

Um die im Wesentlichen vollständige Befüllung der Speichervorrichtung 1 ermitteln zu können, weist die Speichervorrichtung 1 in bevorzugter Weise eine weitere Sensoreinrichtung 10 im Bereich des ersten Endes der zweiten Fördereinrichtung 2b, insbesondere im Bereich der Hinterwand 9, auf. Die weitere Sensoreinrichtung 10 kann beispielsweise einen optischen Sensor, zum Beispiel eine Kamera oder Lichtschranke, aufweisen und dazu eingerichtet sein, das Auftreffen des ersten Transportguts auf die Hinterwand 9 zu detektieren. Alternativ oder zusätzlich kann die weitere Sensoreinrichtung 10 einen Drucksensor aufweisen und dazu eingerichtet sein, den durch das Treiben der Transportgüter gegen die Hinterwand 9 erzeugten Staudruck, der mit zunehmender horizontaler Verdichtung entlang der durch die zweite Fördereinrichtung 2b definierten Förderstrecke immer größer wird, zu erfassen. Die Steuerungseinrichtung ist in bevorzugter Weise entsprechend dazu eingerichtet, beim Detektieren des ersten Transportguts oder beim Erfassen eines Staudrucks, der oberhalb eines vorgegebenen Staudruckschwellenwerts liegt, die Speichervorrichtung 1 aus dem Verdichtungsbetriebsmodus in den Entladebetriebsmodus zu versetzen, um das Ausgeben der gespeicherten Transportgüter zu initiieren. Alternativ oder zusätzlich kann die Steuerungseinrichtung auch dazu eingerichtet sein, beim Detektieren des ersten Transportguts oder beim Erfassen eines Staudrucks, der oberhalb des vorgegebenen Staudruckschwellenwerts liegt, ein Befüllungssignal zu erzeugen, auf das hin die Sortiereinrichtung 50 keine weiteren Transportgüter aus dem Transportgutstrom in Richtung der Speichervorrichtung 1 ausschleust.

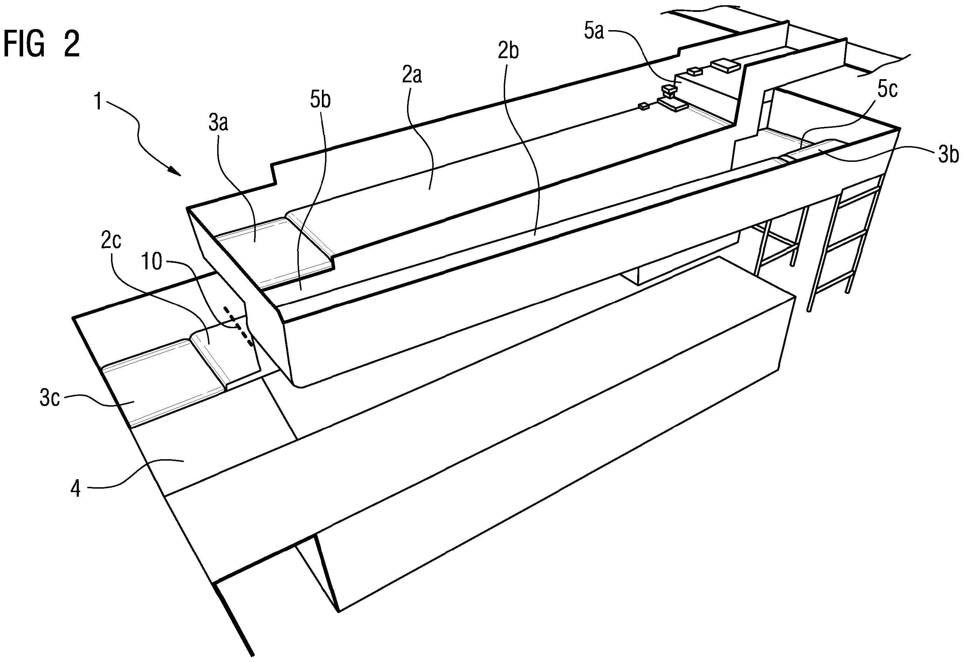

**FIG 2** zeigt ein Beispiel einer Speichervorrichtung 1 für Transportgüter, insbesondere Pakete, mit drei Fördereinrichtungen 2a, 2b, 2c. Die Speichervorrichtung 1 unterscheidet sich neben der dritten Fördereinrichtung 2c, die im Wesentlichen unter der ersten Fördereinrichtung 2a angeordnet ist, von der in FIG 1 gezeigten Speichervorrichtung dadurch, dass die weitere Umlenkeinrichtung 3b statt am zweiten Ende der zweiten Fördereinrichtung 2b am ersten Ende der zweiten Fördereinrichtung 2b, und zwar anstelle einer Hinterwand, angeordnet ist, um die von der zweiten Fördereinrichtung 2b geförderten Transportgüter auf die dritte Fördereinrichtung 2c umzulenken. Dabei besteht zwischen der weiteren Umlenkeinrichtung 3b und der dritten Fördereinrichtung 2c vorzugsweise ein dritter Absatz 5c, um eine weitere vertikale Verdichtung der Transportgüter erreichen zu können. Insbesondere können die von der weiteren Umlenkeinrichtung 3b umgelenkten Transportgüter so an einem ersten Ende der dritten Fördereinrichtung 2c auf die dritte Fördereinrichtung 2c herabfallen. An einem gegenüberliegenden zweiten Ende der dritten Fördereinrichtung 2c ist zudem eine weitere Umlenkeinrichtung 3c angeordnet, um von der dritten Fördereinrichtung 2c beförderte Transportgüter zu einer Ausgabeeinrichtung 4, die im vorliegenden Beispiel als Abwurfstelle ausgebildet ist, umzuleiten.

In diesem Ausführungsbeispiel ist der Förderweg, der sich aus den durch die erste, zweite und dritte Fördereinrichtung 2a, 2b, 2c jeweils definierten Förderstrecken ergibt, spiralförmig bzw. helixartig und somit sehr kompakt ausgebildet. Um dabei ausreichend Raum für die Anordnung der dritten Fördereinrichtung 2c bzw. für durch die dritte Fördereinrichtung 2c geförderte Transportgüter zu schaffen, ist vorzugsweise zumindest die zweite Fördereinrichtung 2b abschüssig ausgebildet, d.h. unter einem Winkel zur Horizontalen angeordnet. Zusammen mit dem durch die Absätze 5b, 5c gebildeten vertikalen Versatz kann so eine ausreichende Verlagerung der dritten Fördereinrichtung 2c unter die erste Fördereinrichtung 2a erreicht werden.

Um hierbei die vollständige Befüllung der Speichervorrichtung 1 zu ermitteln, kann die, vorzugsweise als optischer Sensor ausgebildete, weitere Sensorvorrichtung 10 im Bereich des zweiten Endes der dritten Fördereinrichtung 2c angeordnet sein. Die Steuerungseinrichtung kann dann dazu eingerichtet sein, bei der Detektion eines ersten Transportguts an dieser Position ein entsprechendes Befüllungssignal zu erzeugen.

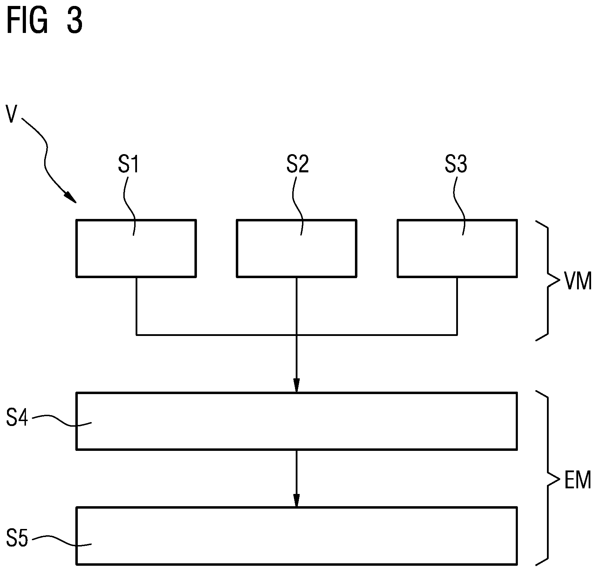

**FIG 3** zeigt ein Beispiel eines Verfahrens V zum Speichern von Transportgütern, insbesondere Paketen, vorzugsweise mithilfe einer in FIG 1 oder FIG 2 gezeigten Speichervorrichtung.

In einem Verfahrensschritt S1 werden Transportgüter durch eine erste Fördereinrichtung von einem ersten Ende der ersten Fördereinrichtung zu einer an einem gegenüberliegenden zweiten Ende der ersten Fördereinrichtung angeordneten Umlenkeinrichtung befördert. Zu diesem Zweck kann, etwa durch eine Steuerungseinrichtung, eine mit der ersten Fördereinrichtung gekoppelte Motoranordnung, insbesondere ein erster Elektromotor der Motoranordnung, entsprechend angesteuert werden.

In einem weiteren Verfahrensschritt S2 werden die durch die erste Fördereinrichtung beförderten Transportgüter mithilfe der Umlenkeinrichtung auf eine zweite Fördereinrichtung umgelenkt. Zu diesem Zweck kann die Umlenkeinrichtung dazu eingerichtet sein, die Bewegungsrichtung der Transportgüter gegenüber der Längserstreckung der erste Fördereinrichtung um im Wesentlichen 90° zu ändern. Beispielsweise kann die Steuerungseinrichtung die ebenfalls mit der Umlenkeinrichtung gekoppelte Motoranordnung, insbesondere einen Umlenkmotor der Motoranordnung, entsprechend ansteuern, um ein Transportmittel wie etwa ein Förderband der Umlenkeinrichtung zu bewegen.

Im Rahmen des Verfahrensschritts S2 werden Transportgüter auch über einen Absatz, der zwischen der Umlenkeinrichtung und der zweiten Fördereinrichtung gebildet ist, befördert. Die Transportgüter fallen dadurch von der Umlenkeinrichtung auf die zweite Fördereinrichtung herab. Dort kann sich entsprechend ein Haufen von Transportgütern bilden.

In einem weiteren Verfahrensschritt S3 werden die auf die zweite Fördereinrichtung umgelenkten Transportgüter durch die zweite Fördereinrichtung befördert. Zu diesem Zweck kann die Motoranordnung, insbesondere ein zweiter Elektromotor der Motoranordnung, entsprechend angesteuert werden. Vorzugsweise veranlasst die Steuerungseinrichtung dabei eine schrittweise Beförderung der Transportgüter durch die zweite Fördereinrichtung, sodass sich bei Stillstand der zweiten Fördereinrichtung jeweils weitere Haufen bzw. Stapel aus den Absatz herabfallenden Transportgütern bilden können.

Die Verfahrensschritte S1 bis S3 werden in bevorzugter Weise so lange ausgeführt, bis die Speichervorrichtung vollständig gefüllt ist.

Mit Bezug auf die in FIG 1 gezeigte Speichervorrichtung kann das Ausführen der Verfahrensschritte S1 bis S3 dabei einem Verdichtungsbetriebsmodus VM entsprechen. Nach der Befüllung der Speichervorrichtung kann die in FIG 1 gezeigte Speichervorrichtung in einen Entladebetriebsmodus EM versetzt werden, in welchem zunächst die sich auf der zweiten Fördereinrichtung beförderten Transportgüter in einem weiteren Verfahrensschritt S4 durch die zweite Fördereinrichtung zu einer Ausgabeeinrichtung befördert werden und anschließend die sich auf der ersten Fördereinrichtung befindlichen Transportgüter in einem weiteren Verfahrensschritt S5 durch das Zusammenspiel von erster Fördereinrichtung und Umlenkeinrichtung auf die zweite Fördereinrichtung und durch diese ebenfalls zur Ausgabeeinrichtung befördert werden.

Beim Ausführen der Verfahrensschritte S1 bis S3 werden die Verfahrensschritte S1 und S3 vorzugsweise synchron ausgeführt, d. h. Fördermittel, z. B. in Form von Förderbändern, der ersten und zweiten Fördereinrichtung fördern synchron schrittweise. Der Verfahrensschritt S2 kann dagegen kontinuierlich ausgeführt werden, d. h. das Fördermittel der Umlenkeinrichtung fördert durchgängig. Dadurch können bei Stillstand der beiden Fördereinrichtungen durch das andauernde Umlenken und Befördern über den Absatz die Stapel von Transportgütern auf der zweiten Fördereinrichtung erzeugt werden.

## Patentansprüche

1. Speichervorrichtung (1) für Transportgüter, insbesondere Pakete, mit einer ersten Fördereinrichtung (2a), einer zweiten Fördereinrichtung (2b) und einer Umlenkeinrichtung (3a) zum Umlenken von durch die erste Fördereinrichtung (2a) geförderten Transportgütern auf die zweite Fördereinrichtung (2b),
wobei eine Motoranordnung zum motorischen Antreiben der ersten Fördereinrichtung (2a) und/oder der zweiten Fördereinrichtung (2b) und ein Absatz (5a, 5b, 5c), über den die Transportgüter gefördert werden, vorgesehen sind,
wobei die Speichervorrichtung (1) dazu eingerichtet ist, die Transportgüter mithilfe des Absatzes (5a, 5b, 5c) vertikal zu verdichten,
wobei sich die zweite Fördereinrichtung (2b) zumindest im Wesentlichen parallel zur ersten Fördereinrichtung (2a) erstreckt
**dadurch gekennzeichnet, dass**
die Umlenkeinrichtung dazu eingerichtet ist, die Transportgüter in eine Richtung zumindest im Wesentlichen senkrecht zu der durch die erste und/oder zweite Fördereinrichtung gebildete Förderstrecke umzulenken, und
wobei die Umlenkeinrichtung eine gerade Förderstrecke bildet.

2. Speichervorrichtung (1) nach Anspruch 1,
**dadurch gekennzeichnet,**
**dass** die zweite Fördereinrichtung (2b) relativ zur Umlenkeinrichtung (3a) derart angeordnet ist, dass der Absatz (5b) zwischen der Umlenkeinrichtung (3a) und der zweiten Fördereinrichtung (2b) gebildet ist.

3. Speichervorrichtung (1) nach einem der Ansprüche 1 oder 2,
**dadurch gekennzeichnet,**
**dass** die Motoranordnung zum motorischen Antreiben der Umlenkeinrichtung (3a) eingerichtet ist.

4. Speichervorrichtung (1) nach einem der vorangehenden Ansprüche,
**dadurch gekennzeichnet,**
**dass** die zweite Fördereinrichtung (2b) an einem ersten Ende von einer Hinterwand (9) begrenzt ist und die Speichervorrichtung (1) in einem Verdichtungsbetriebsmodus (VM) betreibbar ist, in dem die zweite Fördereinrichtung (2b) die Transportgüter gegen die Hinterwand (9) treibt.

5. Speichervorrichtung (1) nach einem der vorangehenden Ansprüche,
**dadurch gekennzeichnet,**
**dass** die Speichervorrichtung (1) in einem Entladebetriebsmodus (EM) betreibbar ist, in dem die zweite Fördereinrichtung (2b) die Transportgüter zu einem zweiten Ende der zweiten Fördereinrichtung (2b) treibt, an dem die Transportgüter aus der Speichervorrichtung (1) ausgebbar sind.

6. Speichervorrichtung (1) nach einem der vorangehenden Ansprüche,
g e k e n n z e ich n e t durch
eine Sensoreinrichtung (7) zur Erfassung von Transportgütern und eine Steuerungseinrichtung, die dazu eingerichtet ist, die Motoranordnung auf Grundlage der Erfassung von Transportgütern zu steuern.

7. Speichervorrichtung (1) nach einem der vorangehenden Ansprüche,
**gekennzeichnet durch**
eine Steuerungseinrichtung, die dazu eingerichtet ist, von außerhalb der Speichervorrichtung (1) bereitgestellte Information bezüglich eingehender Transportgüter aufzunehmen und die Motoranordnung auf Grundlage der aufgenommenen Information zu steuern.

8. Speichervorrichtung (1) nach einem der vorangehenden Ansprüche,
**dadurch gekennzeichnet,**
**dass** die erste Fördereinrichtung (2a) wenigstens ein Fördermittel (6a) umfasst.

9. Speichervorrichtung (1) nach einem der vorangehenden Ansprüche,
**dadurch gekennzeichnet,**
**dass** die zweite Fördereinrichtung (2b) wenigstens zwei Fördermittel (6c, 6d) umfasst, die unabhängig voneinander mithilfe der Motoranordnung antreibbar sind.

10. Speichervorrichtung (1) nach einem der vorangehenden Ansprüche,
**gekennzeichnet durch**
eine weitere Umlenkeinrichtung (3b) zum Umlenken von **durch** die zweite Fördereinrichtung (2b) geförderten Transportgütern.

11. Speichervorrichtung (1) nach einem der vorangehenden Ansprüche,
**gekennzeichnet durch**
eine Ausgabeeinrichtung (4), die zur Ausgabe von **durch** die erste und zweite Fördereinrichtung (2a, 2b) beförderten Transportgütern aus der Speichervorrichtung (1) eingerichtet ist.

12. Speichervorrichtung (1) nach einem der vorangehenden Ansprüche,
**gekennzeichnet durch**
zwei Seitenwände (8a, 8b), die auf einander gegenüberliegenden Längsseiten der ersten Fördereinrichtung (2a) angeordnet sind, wobei eine der zwei Seitenwände (8b) in einem vorgegebenen Abstand zur Umlenkeinrichtung (3a) endet.

13. Speichervorrichtung (1) nach einem der vorangehenden Ansprüche,
**gekennzeichnet durch**
wenigstens eine weitere mithilfe der Motoranordnung antreibbare Fördereinrichtung (2c) und eine weitere Umlenkeinrichtung (3b) zum Umlenken von **durch** die zweite Fördereinrichtung (2b) geförderten Transportgütern auf die wenigstens eine weitere Fördereinrichtung (2c).

14. Verfahren (V) zum Speichern von Transportgütern, insbesondere Paketen, aufweisend die folgenden Schritte:
- motorisches Antreiben (S1, S3) einer ersten Fördereinrichtung (2a) und einer zweiten Fördereinrichtung (2b) mithilfe einer Motoranordnung;
- Umlenken (S2) von durch die erste Fördereinrichtung (2a) geförderten Transportgütern auf die zweite Fördereinrichtung (2b) mithilfe einer Umlenkeinrichtung (3a) umgelenkt werden; und
- Befördern (S2) der Transportgüter über einen Absatz (5a, 5b, 5c) zur vertikalen Verdichtung,
wobei sich die zweite Fördereinrichtung (2b) zumindest im Wesentlichen parallel zur ersten Fördereinrichtung (2a) erstreckt, und
**dadurch gekennzeichnet, dass**
die Umlenkeinrichtung dazu eingerichtet ist, die Transportgüter in eine Richtung zumindest im Wesentlichen senkrecht zu der durch die erste und/oder zweite Fördereinrichtung gebildete Förderstrecke umzulenken, und
wobei die Umlenkeinrichtung eine gerade Förderstrecke bildet.

## Claims

1. Storage device (1) for transport goods, in particular packages, having a first conveying device (2a), a second conveying device (2b) and a deflection device (3a) for deflecting transport goods conveyed by the first conveying device (2a) onto the second conveying device (2b), wherein a motor arrangement for motorically driving the first conveying device (2a) and/or the second conveying device (2b) and a step (5a, 5b, 5c) over which the transport goods are conveyed are provided,
wherein the storage device (1) is arranged to vertically compact the transport goods by means of the step (5a, 5b, 5c),
wherein the second conveying device (2b) extends at least substantially parallel to the first conveying device (2a) **characterized in that** the deflection device is arranged to deflect the transport goods in a direction at least substantially perpendicular to the conveying path formed by the first and/or second conveying device, and
wherein the deflection device forms
a straight conveying path.

2. Storage device (1) according to claim 1,
**characterized in that**
the second conveying device (2b) is arranged relative to the deflection device (3a) such that the step (5b) is formed between the deflection device (3a) and the second conveying device (2b).

3. Storage device (1) according to one of claims 1 or 2,
**characterized in that**
the motor arrangement is set up for motor-driving the deflection device (3a).

4. Storage device (1) according to any one of the preceding claims,
**characterized in that**
the second conveying device (2b) is bounded at a first end by a rear wall (9), and the storage device (1) is operable in a compaction operating mode (VM) in which the second conveying device (2b) drives the transport goods against the rear wall (9).

5. Storage device (1) according to any one of the preceding claims,
**characterized in that**
the storage device (1) is operable in an unloading operating mode (EM), in which the second conveying device (2b) drives the transport goods to a second end of the second conveying device (2b), at which the transport goods can be discharged from the storage device (1).

6. Storage device (1) according to any one of the preceding claims,
**characterized by**
a sensor device (7) for detecting transport goods and control device adapted to control the motor arrangement based on the detection of transport goods.

7. Storage device (1) according to any one of the preceding claims,
**characterized by**
a control device arranged to receive information provided from outside the storage device (1) relating to incoming transport goods and to control the motor arrangement on the basis of the received information.

8. Storage device (1) according to any one of the preceding claims,
**characterized in that**
the first conveying device (2a) comprises at least one conveying means (6a).

9. Storage device (1) according to any one of the preceding claims,
**characterized in that**
the second conveying device (2b) comprises at least two conveying means (6c, 6d) which can be driven independently of one another with the aid of the motor arrangement.

10. Storage device (1) according to any one of the preceding claims,
**characterized by**
a further deflection device (3b) for deflecting transport goods conveyed by the second conveying device (2b).

11. Storage device (1) according to any one of the preceding claims,
**characterized by**
a dispensing device (4), which is arranged for dispensing transport goods conveyed by the first and second conveying devices (2a, 2b) from the storage device (1).

12. Storage device (1) according to any one of the preceding claims,
**characterized by**
two side walls (8a, 8b) arranged on opposite longitudinal sides of the first conveying device (2a), wherein one of the two side walls (8b) ends at a predetermined distance from the deflection device (3a).

13. Storage device (1) according to any one of the preceding claims,
**characterized by**
at least one further conveying device (2c) drivable with the aid of the motor arrangement and a further deflection device (3b) for deflecting transport goods conveyed by the second conveying device (2b) onto the at least one further conveying device (2c).

14. Method (V) for storing transport goods, in particular packages, comprising the following steps:
- motorized driving (S1, S3) of a first conveying device (2a) and a second conveying device (2b) with the aid of a motor arrangement;
- deflecting (S2) transport goods conveyed by the first conveying device (2a) onto the second conveying device (2b) with the aid of a deflection device (3a); and
- conveying (S2) of the transport goods over a step (5a, 5b, 5c) for vertical compaction,
wherein the second conveying device (2b) extends at least substantially parallel to the first conveying device (2a), and
**characterized in that** the deflection device is arranged to deflect the transport goods in a direction at least substantially perpendicular to the conveying path formed by the first and/or second conveying device, and
wherein the deflection device forms a straight conveying path.

## Revendications

1. Dispositif de stockage (1) pour des marchandises à transporter, en particulier des paquets, comprenant un premier organe de convoyage (2a), un deuxième organe de convoyage (2b) et un organe de renvoi (3a) destiné à renvoyer des marchandises, convoyées par le premier organe de convoyage (2a), vers le deuxième organe de convoyage (2b),
dans lequel sont prévus un ensemble moteur, destiné à entraîner par voie motrice le premier organe de convoyage (2a) et/ou le deuxième organe de convoyage (2b), et un épaulement (5a, 5b, 5c) par-dessus lequel les marchandises à transporter sont convoyées,
le dispositif de stockage (1) est conçu pour compacter verticalement les marchandises à transporter à l'aide de l'épaulement (5a, 5b, 5c),
le deuxième organe de convoyage (2b) s'étend au moins sensiblement parallèlement au premier organe de convoyage (2a),
**caractérisé en ce que**
l'organe de renvoi est conçu pour renvoyer les marchandises à transporter dans une direction au moins sensiblement perpendiculaire au trajet de convoyage formé par le premier et/ou le deuxième organe de convoyage, et l'organe de renvoi forme un trajet de convoyage rectiligne.

2. Dispositif de stockage (1) selon la revendication 1,
**caractérisé en ce que**
le deuxième organe de convoyage (2b) est disposé par rapport à l'organe de renvoi (3a) de telle sorte que l'épaulement (5b) est formé entre l'organe de renvoi (3a) et le deuxième organe de convoyage (2b).

3. Dispositif de stockage (1) selon l'une des revendications 1 ou 2,
**caractérisé en ce que**
l'ensemble moteur est conçu pour entraîner par voie motrice l'organe de renvoi (3a).

4. Dispositif de stockage (1) selon l'une des revendications précédentes,
**caractérisé en ce que**
le deuxième organe de convoyage (2b) est délimité à une première extrémité par une paroi arrière (9), et le dispositif de stockage (1) peut fonctionner dans un mode de fonctionnement de compactage (VM) dans lequel le deuxième organe de convoyage (2b) pousse les marchandises à transporter contre la paroi arrière (9).

5. Dispositif de stockage (1) selon l'une des revendications précédentes,
**caractérisé en ce que**
le dispositif de stockage (1) peut fonctionner dans un mode de fonctionnement de déchargement (EM) dans lequel le deuxième organe de convoyage (2b) pousse les marchandises à transporter vers une deuxième extrémité du deuxième organe de convoyage (2b), à laquelle les marchandises à transporter peuvent être distribuées depuis le dispositif de stockage (1).

6. Dispositif de stockage (1) selon l'une des revendications précédentes,
**caractérisé par**
un organe de détection (7) destiné à détecter des marchandises à transporter et un organe de commande conçu pour commander l'ensemble moteur en se basant sur la détection des marchandises à transporter.

7. Dispositif de stockage (1) selon l'une des revendications précédentes,
**caractérisé par**
un organe de commande conçu pour recevoir des informations fournies de l'extérieur du dispositif de stockage (1), concernant des marchandises à transporter entrantes, et pour commander l'ensemble moteur en se basant sur les informations reçues.

8. Dispositif de stockage (1) selon l'une des revendications précédentes,
**caractérisé en ce que**
le premier organe de convoyage (2a) comprend au moins un moyen de convoyage (6a).

9. Dispositif de stockage (1) selon l'une des revendications précédentes,
**caractérisé en ce que**
le deuxième organe de convoyage (2b) comprend au moins deux moyens de convoyage (6c, 6d) qui peuvent être entraînés indépendamment l'un de l'autre à l'aide de l'ensemble moteur.

10. Dispositif de stockage (1) selon l'une des revendications précédentes,
**caractérisé par**
un autre organe de renvoi (3b) destiné à renvoyer les marchandises à transporter convoyées par le deuxième organe de convoyage (2b).

11. Dispositif de stockage (1) selon l'une des revendications précédentes,
**caractérisé par**
un organe de distribution (4) conçu pour distribuer des marchandises à transporter, convoyées par les premier et deuxième organes de convoyage (2a, 2b), depuis le dispositif de stockage (1).

12. Dispositif de stockage (1) selon l'une des revendications précédentes,
**caractérisé par**
deux parois latérales (8a, 8b) disposées sur des côtés longitudinaux opposés du premier organe de convoyage (2a), l'une des deux parois latérales (8b) se terminant à une distance prédéterminée de l'organe de renvoi (3a).

13. Dispositif de stockage (1) selon l'une des revendications précédentes,
**caractérisé par**
au moins un autre organe de convoyage (2c), pouvant être entraîné à l'aide de l'ensemble moteur, et par un autre organe de renvoi (3b) destiné à renvoyer les marchandises à transporter, convoyées par le deuxième organe de convoyage (2b), vers ledit au moins un autre organe de convoyage (2c).

14. Procédé (V) de stockage de marchandises à transporter, en particulier de paquets, comprenant les étapes suivantes consistant à :
- entraîner par voie motrice (S1, S3) un premier organe de convoyage (2a) et un deuxième organe de convoyage (2b) à l'aide d'un ensemble moteur ;
- renvoyer (S2) les marchandises à transporter, convoyées par le premier organe de convoyage (2a), vers le deuxième organe de convoyage (2b) à l'aide d'un organe de renvoi (3a) ; et
- convoyer (S2) les marchandises à transporter par-dessus un épaulement (5a, 5b, 5c) pour le compactage vertical,
le deuxième organe de convoyage (2b) s'étendant au moins sensiblement parallèlement au premier organe de convoyage (2a),
**caractérisé en ce que**
l'organe de renvoi est conçu pour renvoyer les marchandises à transporter dans une direction au moins sensiblement perpendiculaire au trajet de convoyage formé par le premier et/ou le deuxième organe de convoyage, et l'organe de renvoi forme un trajet de convoyage rectiligne.
